Europäisches Patentamt

European Patent Office

Office européen des brevets

(19)

(11) **EP 0 672 618 B1**

(12) **EUROPÄISCHE PATENTSCHRIFT**

(45) Veröffentlichungstag und Bekanntmachung des Hinweises auf die Patenterteilung:
**24.06.1998 Patentblatt 1998/26**

(51) Int. Cl.$^6$: **C01B 17/04**

(21) Anmeldenummer: **95103777.9**

(22) Anmeldetag: **15.03.1995**

(54) **Verfahren zur Gewinnung von elementarem Schwefel aus einem H2S enthaltenden Gasgemisch**

Process for the production of elementary sulphur from a H2S containing gas mixture

Procédé d'obtention de soufre élémentaire à partir d'un mélange de gaz contenant H2S

(84) Benannte Vertragsstaaten:
**AT BE DE FR IT NL SE**

(30) Priorität: **17.03.1994 DE 4409203**

(43) Veröffentlichungstag der Anmeldung:
**20.09.1995 Patentblatt 1995/38**

(73) Patentinhaber:
**Linde Aktiengesellschaft
65189 Wiesbaden (DE)**

(72) Erfinder:
- **Heisel, Michael, Dr. Ing.
  D-82049 Pullach (DE)**
- **Marold, Freimut, Dipl.-Ing.
  D-96482 Ahornwohlbach (DE)**
- **Gwinner, Martin, Dipl.-Ing.
  D-82069 Hohenschäftlarn (DE)**

(74) Vertreter: **Kasseckert, Rainer
Linde Aktiengesellschaft,
Zentrale Patentabteilung
82049 Höllriegelskreuth (DE)**

(56) Entgegenhaltungen:
**WO-A-90/02096          WO-A-92/02449**

- **LINDE BERICHTE AUS TECHNIK UND WISSENSCHAFT, Nr. 70, 1993 Seiten 15-19, HEISEL ET AL**
- **LINDE BERICHTE AUS TECHNIK UND WISSENSCHAFT, Nr. 62, 1988 Seiten 33-38, HEISEL ET AL**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zur Gewinnung von elementarem Schwefel aus einem $H_2S$ enthaltenden Gasgemisch, wobei das Gasgemisch zunächst in einer Claus-Anlage mit thermischem und katalytischem Teil einer Entschwefelung unter Gewinnung von Elementarschwefel unterworfen wird, wobei die noch im Claus-Abgas enthaltenen Schwefelverbindungen mittels Hydrierung und gegebenenfalls mittels Hydrolyse in $H_2S$ umgewandelt werden und wobei das hydrierte Claus-Abgas anschließend einer katalytischen Direktoxidation des $H_2S$ zu Elementarschwefel unterzogen wird.

Der Einsatz von Claus-Anlagen zur Behandlung von $H_2S$-haltigen Gasgemischen ist seit langem bekannt. Claus-Anlagen eignen sich insbesondere zur Behandlung von $H_2S$-reichen Gasen.

Eine konventionelle Claus-Anlage umfaßt einen thermischen und katalytischen Teil. Der thermische Teil der Claus-Anlage besteht im wesentlichen aus einem Claus-Ofen. In diesem Claus-Ofen wird unter Zugabe von Luft ein Teil des im Rohgas enthaltenen $H_2S$ unter Bildung von $SO_2$ verbrannt. An den thermischen Teil der Claus-Anlage schließt ein katalytischer Teil an. Dieser thermische Teil der Claus-Anlage besteht aus mehreren - in der Regel zwei oder drei - katalytischen Claus-Stufen. In diesen katalytischen Claus-Stufen wird das bei der Verbrennung gebildete $SO_2$ mit $H_2S$ nach der Claus-Reaktion

$$2\,H_2S + SO_2 = 3/x\,S_x + 2\,H_2O + \text{Wärme} \qquad (1)$$

gebildet. Um eine möglichst hohe Schwefelrückgewinnungsrate zu erzielen wird daher die Verbrennung im Claus-Ofen so durchgeführt, daß ein Drittel des $H_2S$ zu $SO_2$ verbrannt wird.

Unter dem Druck immer schärferer Umweltauflagen und im Bestreben, die Schwefelrückgewinnungsrate weiter zu steigern, sind zahlreiche Verfahren entwickelt worden, das Claus-Abgas (Claus tail gas) weiterzubehandeln. Obwohl die Erhöhung der Schwefelrückgewinnungsrate durch eine Weiterbehandlung des Claus-Abgases zu einer zusätzlichen Erzeugung des Wertstoffes Schwefel führt, übersteigen die für die weitere Reinigung bzw. Entschwefelung des Claus-Abgases notwendigen Investitionskosten den Gewinn aus der zusätzlichen Schwefelerzeugung bei weitem.

Die bislang bekannten und für hohe Schwefelrückgewinnungsraten bedeutsamen Verfahren zur Reinigung des Claus-Abgases lassen sich im wesentlichen in SubDewPoint-Verfahren (SDP-Verfahren), Recycle-Verfahren und Direktoxidationsverfahren einteilen. Einen Überblick über die verschiedenen Verfahren zur Reinigung des Claus-Abgases liefert beispielsweise der Artikel "Tail Gas Cleanup Process Technology", Energy Progress, Vol. 6, No. 2, June 1986, Seiten 84 bis 90.

Ein Beispiel für ein SDP-Verfahren stellt das SULFREEN-Verfahren dar. SDP-Verfahren eignen sich für Schwefelrückgewinnungsraten bis zu 99,6 %. Ein Problem dieser Verfahren ist, daß Änderungen der Rohgaszusammensetzung oder der Rohgasmenge unweigerlich zu Einbußen bei der Schwefelausbeute und außerdem zu erhöhten Emissionen führen. Das liegt daran, daß die optimale Luftzuspeisung zum Claus-Ofen erst am Ende der Anlage durch einen sogenannten Air Demand Analyser (ADA) erfolgen kann. Bis der ADA die Änderung bemerken kann, ist die Störung bereits durch die gesamte Anlage gewandert. Dadurch sinkt die Schwefelausbeute unter die für SDP-Verfahren maximale Schwefelrückgewinnungsrate von 99,6 % ab. In der Praxis werden deshalb mit SDP-Anlagen im Langzeitdurchschnitt nur Schwefelrückgewinnungsraten von 99,1 bis 99,3 % erzielt.

Als Beispiele für Recycle-Verfahren können das SCOT-Verfahren oder das CLINTOX-Verfahren herangezogen werden. Die Recycle-Verfahren haben den Vorteil einer gleichbleibend hohen Schwefelrückgewinnungsrate von > 99,8 %. Der Nachteil der Recycle-Verfahren liegt in den sehr hohen Kosten, da sie eine Gaswäsche in einer Absorptionskolonne mit zugehöriger Regenerierung des in der Gaswäsche eingesetzten Absorptionsmittels umfassen. Die Reinigung des Claus-Abgases mittels eines Recycle-Verfahrens fällt im Vergleich zu konkurrierenden Verfahren daher wesentlich teurer aus. Daher finden Recycle-Verfahren nur in wenigen Fällen Anwendung, nämlich dort, wo die gesetzlichen Auflagen außerordentlich hohe und bislang nur mit Recycle-Verfahren erzielbare Schwefelrückgewinnungsraten verlangen.

Die Direktoxidationsverfahren stellen einen Kompromiß hinsichtlich der Kosten und der Schwefelrückgewinnungsrate zwischen den SDP-Verfahren und den Recycle-Verfahren dar. Beispiele für Direktoxidationsverfahren sind das BSR/SELECTOX-Verfahren, das MODOP-Verfahren oder das SUPERCLAUS-Verfahren. Das MODOP-Verfahren und das SUPERCLAUS-Verfahren sind beispielsweise beschrieben in Hydrocarbon Processing, April 1990, Gas Process Handbook '90, Seite 88 und Seite 97. Beim SUPERCLAUS-Verfahren wird das Claus-Abgas in einen Reaktor gegeben, in dem eine selektive Direktoxidation des $H_2S$ in Elementarschwefel stattfindet. Beim BSR/Selectox-Verfahren und beim MODOP-Verfahren wird das Claus-Abgas in einem Reaktor reduziert bzw. hydriert. An die Hydrierung schließt sich ein Quenchkühler an. Nach der Wasserwäsche im Quenchkühler wird das Abgas unter Zugabe von Luft in einen Direktoxidationsreaktor gegeben, in dem $H_2S$ selektiv nach für die Direktoxidation geltenden der Reaktionsgleichung

$$2\,H_2S + O_2 = 2/x\,S_x + 2\,H_2O + \text{Wärme} \qquad (2)$$

zu elementarem Schwefel oxidiert wird. Der Direktoxidationsreaktor kann im MODOP-Verfahren einstufig oder zweistufig mit zwischengeschalteter Schwefelkondensation ausgeführt werden. Mit dem BSR/Selectox-Verfahren wird eine Schwefelrückgewinnungsrate von 98,5 bis 99 % erreicht. Mit dem SUPERCLAUS-Verfahren hinter einer drei-stufigen Claus-Anlage kann eine Schwefelausbeute von 99 % erzielt werden. Mit dem MODOP-Verfahren kann die Schwefelrückgewinnungsrate auf 99,5 % gesteigert werden.

Allgemeine Informationen über bekannte Verfahren zur Reinigung des Claus-Abgases, sowie spezifische Informationen zum MODOP-Verfahren und zum SUPERCLAUS-Verfahren können beispielsweise den europäischen Patentschriften EP-B1-0 078 690 und EP-B1-0 242 006 entnommen werden.

In der Regel wird bei den SDP-Verfahren, bei den Recycle-Verfahren und bei den Direktoxidationsverfahren das nach der Schwefelrückgewinnung anfallende Abgas einer Nachverbrennung zugeführt.

Aus "Das CLINSULF®-Verfahren zur Schwefelrückgewinnung", Linde-Berichte aus Technik und Wissenschaft, Heft 62, 1988, Seiten 33 bis 38, ist bekannt, einen innengekühlten Reaktor (CLINSULF-Reaktor) für die katalytische Schwefelrückgewinnung bei Temperaturen unterhalb des Schwefeltaupunktes oder sogar unterhalb des Schwefelfestpunktes zu benutzen. Im CLINSULF-Verfahren werden ein oder mehrere innengekühlte Reaktoren im Anschluß an den Claus-Ofen an Stelle der adiabat betriebenen Claus-Reaktoren eingesetzt. Der Anwendungsbereich des CLINSULF-Verfahrens liegt insbesondere bei Claus-Rohgasen mit einer vergleichsweise niedrigen $H_2S$-Konzentration.

Zusammenfassend ist festzuhalten, daß zahlreiche Verfahren im Anschluß an eine mehrstufige Claus-Anlage bekannt sind, mit denen ein Claus-Abgas bei einer hohen Gesamtschwefelrückgewinnungsrate gereinigt werden kann. Die mehrstufige Claus-Anlage ist in der Regel als zwei-stufige oder sogar als drei-stufige Claus-Anlage ausgebildet. Unter zwei- bzw. drei-stufiger Claus-Anlage ist dabei eine Claus-Anlage zu verstehen, die neben der thermischen Claus-Stufe zwei bzw. drei katalytische Claus-Stufen (also zwei bzw. drei Claus-Reaktoren) umfaßt.

Der vorliegenden Erfindung liegt die Aufgabe zugrunde, ein Verfahren der eingangs genannten Art aufzuzeigen, welches eine Claus-Anlage mit anschließender Reinigung des Claus-Abgases umfaßt, welches eine schwefelrückgewinnungsrate über 99 % sicherstellt und welches sich durch geringere Kosten auszeichnet. Unter Kosten sind dabei die Investitionskosten, vor allem aber die Betriebskosten angesprochen.

Erfindungsgemäß wird diese Aufgabe dadurch gelöst, daß die Claus-Anlage an katalytischen Stufen genau eine umfaßt und daß die katalytische Direktoxidation in genau einem Reaktor erfolgt, wobei eine Temperatur am Austritt des besagten Reaktor eingehalten wird, die über dem Schwefeltaupunkt liegt.

Überraschenderweise hat sich nämlich gezeigt, daß die Reinigung eines Claus-Abgases mittels einer ein-stufigen Claus-Anlage (eine thermische Claus-Stufe und eine katalytische Claus-Stufe) und mittels einer Direktoxidation des $H_2S$ in Elementarschwefel in nur einem einzigen Reaktor nach einer Hydrierung eine Schwefelrückgewinnungsrate über 99,3 % erreicht werden kann. Die genannte hohe Schwefelrückgewinnungsrate kann mit dem erfindungsgemäßen Verfahren auch im Langzeitdurchschnitt erzielt werden. Bislang galt, daß eine Schwefelrückgewinnungsrate von über 99 % nur ermöglicht wird, wenn die der Reinigung des Claus-Abgases vorgeschaltete Claus-Anlage zumindest zwei oder mehrere katalytische Stufen enthält und die Direktoxidation in mehreren Stufen erfolgt.

Der katalytische Reaktor der erfindungsgemäß ein-stufigen Claus-Anlage wird dabei bevorzugt, insbesondere am Austritt des Reaktors, bis nahe an den Schwefeltaupunkt gefahren. Dies ist deshalb sinnvoll und besonders vorteilhaft, weil bei der Claus-Reaktion nach Gleichung (1) durch eine abnehmende Temperatur das Reaktionsgleichgewicht zugunsten der Reaktionsprodukte, also zugunsten der Bildung von elementarem Schwefel, verschoben wird. Auf eine COS- bzw. $CS_2$-Hydrolyse in diesem Reaktor kann verzichtet werden. Als Katalysator im Claus-Reaktor wird einer der zahlreichen bekannten Claus-Katalysatoren eingesetzt. Die Luft- bzw. $O_2$-Zugabe in die thermische Claus-Stufe wird über den Air Demand Analyser so eingestellt, daß im Claus-Reaktor ein Verhältnis von $H_2S$ zu $SO_2$ von 2:1 vorliegt. Es kann auch ein leichter Überschuß von $H_2S$ eingestellt werden, um eine Sulfatbildung am Claus-Katalysator zu unterbinden.

Das aus der katalytischen Claus-Stufe abgezogene Gas wird in einem Schwefelkondensator von elementarem Schwefel befreit. Das Claus-Abgas der ein-stufigen Claus-Anlage wird mit einem Reduziergas vermischt und in einen Hydrierreaktor gegeben. Neben einer Hydrierung der Schwefelverbindungen wie $SO_2$ in $H_2S$ findet im Reaktor auch gegebenenfalls eine Hydrolyse von COS und/oder $CS_2$ statt. Dies hat zur Folge, daß im Hydrierreaktor praktisch alle im Claus-Abgas enthaltenen Schwefelverbindungen in $H_2S$ umgewandelt werden. Als Katalysator für die Hydrierung bzw. Hydrolyse der Schwefelkomponenten in $H_2S$ können bekannte Katalysatoren verwendet werden. Besonders geeignet haben sich Katalysatoren gezeigt, die Cobalt und Molybdän enthalten. Ein derartiger Katalysator ist beispielsweise aus dem BSR/SELECTOX-Verfahren bekannt. Mit Vorteil wird das Reduziergas durch eine substöchiometrische Verbrennung von Luft bzw. Sauerstoff und einem Brenngas erzeugt. Nach der Hydrierung erfolgt eine Entfernung des größten Teils des im Claus-Abgas enthaltenen Reaktionswassers durch Abkühlung. Nachdem das Reaktionswasser aus dem hydrierten Claus-Abgas entfernt wurde, wird das Claus-Abgas unter stöchiometrischer Zumischung von Luft bzw. Sauerstoff in einem Direktoxidationsreaktor in elementaren Schwefel nach Gleichung (2) umgewandelt. Für diese katalytische Direktoxidation des $H_2S$ in Elementarschwefel können alle für diesen Zweck bekannten Katalysatoren eingesetzt werden. Es hat sich gezeigt, daß Katalysatoren, die $TiO_2$ als aktive Komponente enthalten, für die Direktoxidation besonders geeignet sind. Ein derartiger Katalysator ist beispielsweise aus der europäischen Patentschrift EP-B1-0 078 690 bekannt.

Dadurch, daß das $H_2S/O_2$-Verhältnis durch Zugabe von Luft bzw. $O_2$ vor dem Direktoxidationsreaktor neu eingestellt wird und eine Luft- bzw. $O_2$-Zufuhr auch vor der Hydrierung erfolgt, kann durch diese Luft- bzw. $O_2$-Zugabe vor der Hydrierung eine nicht optimale Einstellung des Rohgas-/Luft-Verhältnisses bzw. des Rohgas-/$O_2$-Verhältnisses im Claus-Ofen durch den Air Demand Analyser behoben werden.

Beim erfindungsgemäßen Verfahren kann in der ein-stufigen Claus-Anlage eine Schwefelgewinnung von 92 bis 96 % und im Direktoxidationsreaktor eine Schwefelrückgewinnung von 92 bis 94 % erreicht werden. Das bewirkt, daß die Gesamtschwefelrückgewinnungsrate des erfindungsgemäßen Verfahrens einen Wert zwischen 99,3 und 99,6 % auch im Langzeitmittel einnimmt. Besonders überraschend ist dabei, daß diese hohe Schwefelrückgewinnungsrate in einem einfachen Verfahren mit insgesamt nur drei Reaktoren erzielt werden kann. Das erfindungsgemäße Verfahren zeichnet sich gerade durch diese Einfachheit besonders aus, zumal vergleichbare Schwefelrückgewinnungsraten bislang nur in komplizierteren und vor allem wesentlich teureren alternativen Verfahren zur Auswahl standen.

Mit besonderem Vorteil wird als Direktoxidationsreaktor ein innengekühlter Reaktor eingesetzt. Damit wird eine genaue Temperaturkontrolle des Direktoxidationsreaktors ermöglicht. Während in adiabat betriebenen Reaktoren die Temperaturen im Direktoxidationsreaktor wesentlich durch die starke Exothermie der Direktoxidation nach Gleichung (2) beeinflußt wird und eine Temperatursteuerung nur über die Einstellung der Temperatur des Claus-Abgases und/oder der zugeführten Luft bzw. des zugeführten $O_2$ bestimmt werden kann, ermöglicht ein innengekühlter Reaktor eine feine Temperatureinstellung und -regelung im Reaktor. Insbesondere kann in einem innengekühlten Reaktor ein Temperaturprofil in Strömungsrichtung eingestellt werden. Der Direktoxidationsreaktor kann im Einströmbereich auch eine ungekühlte Katalysatorschüttung enthalten, so daß der Reaktor zur katalytischen Direktoxidation in Durchströmungsrichtung mit einer adiabat betriebenen Katalysatorvorschicht ausgestattet ist. Dabei sollte die adiabate Vorschicht jedoch weniger als 50 %, vorzugsweise zwischen 15 und 30 % des gesamten Katalysatorvolumens im Direktoxidationsreaktor enthalten.

In Ausbildung der Erfindung ist im Reaktor zur katalytischen Direktoxidation der Katalysator homogen geschüttet, wobei zur Innenkühlung gewickelte Wärmetauscherrohre eingebettet sind. Ein Beispiel für einen derartigen Reaktor stellt der bereits oben erwähnte CLINSULF-Reaktor dar. Ein innengekühlter Reaktor mit gewickelten Wärmetauscherrohren weist gegenüber anderen innengekühlten Reaktoren, in denen mit Katalysator gefüllte Geradrohre verwendet werden, besondere Vorteile auf. Kesselspeisewasser unter Hochdruck, das üblicherweise zur Kühlung des Reaktors dient, wird in den gewickelten Rohren geführt und belastet folglich nicht die Mantelseite des Reaktors. Der Reaktormantel kann daher aus dünnem Blech hergestellt werden, was einerseits die Investitionskosten verringert, andererseits aber auch die Sicherheit erhöht, da nur der kleine Inhalt der Wärmetauscherrohre unter Hochdruck steht. Ferner ist eine gleichmäßige Gasverteilung über den gesamten Reaktorquerschnitt wesentlich einfacher zu erreichen als bei Katalysatoren in Geradrohren. Durch die gewickelten Wärmetauscherrohre können außerdem unterschiedliche Verhältnisse von Wärmetauscherfläche zu Katalysatorvolumen realisiert werden. Es kann sogar die Dichte der Wärmetauscherflächen in verschiedenen Sektionen des Reaktors unterschiedlich ausgewählt werden. Damit ist eine optimale Anpassung der Wärmetauscherfläche an die zu erwartende Wärme-entwicklung im Reaktor möglich. Schließlich bewirkt eine zunehmende bzw. abnehmende Temperaturdifferenz zwischen der Gasphase und den Wärme-tauscher-rohren eine Erhöhung bzw. Abnahme des Wärmeübergangs. Durch diese Selbstregelung bleibt die Reaktoraustrittstemperatur ohne regelnde Eingriffe von außen in etwa konstant. Die Selbstregelung hält außerdem die Schwefelrückgewinnungsrate für die Direktoxidation bei einem konstant hohen Wert, selbst wenn starke Schwankungen der Menge (nicht aber der Zusammensetzung) des Claus-Abgases vor dem Direktoxidationsreaktor auftreten.

Die erfindungsgemäße katalytische Direktoxidation wird mit Vorteil bei Temperaturen bis ca. 400°C, vorzugsweise zwischen 250 und 300°C, besonders bevorzugt zwischen 280 und 300°C, an der heißesten Stelle des Reaktors durchgeführt. Bei Überschreiten der Temperatur von etwa 300°C beginnt anstelle der Oxidation des $H_2S$ in Elementarschwefel eine unerwünschte Verbrennung des $H_2S$, die vor allem zur Bildung von $SO_2$ führt und damit die Schwefelausbeute verringert. Daher wird eine optimale Schwefelrückgewinnungsrate bei einer maximalen Temperatur im Direktoxidationsreaktor bis etwa 300°C erzielt. Bei Maximaltemperaturen im Bereich über 300°C bis etwa 400°C setzt zwar teilweise eine Verbrennung des $H_2S$ zu $SO_2$ ein, jedoch bleibt die Schwefelrückgewinnungsrate höher als bei einem Claus-Reaktor. Die Temperatur am Reaktoraustritt des Direktoxidationsreaktors kann bis nahe über dem Schwefeltaupunkt liegen, wobei der Temperaturwert des Schwefeltaupunktes vom Schwefelgehalt im Claus-Abgas und vom Druck im Direktoxidationsreaktor bestimmt wird.

Mit Vorteil wird die Wasserentfernung nach der Hydrierung des Claus-Abgases mittels Quenchkühlung in einem Quenchkühler durchgeführt.

Das Abgas, das aus dem Schwefelkondensator, der dem Reaktor zur katalytischen Direktoxidation nachgeschaltet ist, abgezogen wird, enthält immer noch geringe Mengen an Schwefelverbindungen. Das Abgas wird daher mit Vorteil in eine Nachverbrennung gegeben. Damit wird sichergestellt, daß im Abgas noch enthaltene Schwefelkomponenten in das im Vergleich zu $H_2S$ weniger schädliche $SO_2$ umgewandelt werden.

Der innengekühlte Reaktor kann für Gasdurchsätze von etwa 500 bis 50.000 $Nm^3/h$ konstruiert werden. Für den Einsatz als Reaktor zur katalytischen Direktoxidation entspricht dies einer Schwefelkapazität von maximal ca. 500 Tonnen pro Tag.

Konventionelle Claus-Anlagen können in der Regel nur dann rentabel bzw. mit der geforderten Schwefelrückgewinnungsrate eingesetzt werden, wenn der $H_2S$-Gehalt des in die Claus-Anlage eingespeisten Sauergases mindestens einen Wert von 50 % einnimmt. Das erfindungsgemäße Verfahren kann aber auch außer in dem für Claus-Anlagen bekanntermaßen geeigneten Bereich hoher $H_2S$-Gehalte bei niedrigeren $H_2S$-Konzentrationen im Claus-Rohgas eingesetzt werden. Falls das Claus-Rohgas einen $H_2S$-Gehalt von 15 bis 45 % aufweist, werden mit Vorteil 40 bis 66 % des Claus-Rohgases über einen Bypass um die thermische Claus-Stufe direkt in die katalytische Claus-Stufe gegeben. In Weiterbildung der Erfindung werden bei einem $H_2S$-Gehalt des Sauergases unter 15 % die thermische und die katalytische Claus-Stufe durch eine katalytische Direktoxidations-Stufe ersetzt. Im letztgenannten Fall ist also ein erster Direktoxidationsreaktor vor der Hydrierung und einem zweiten nachgeschalteten Direktoxidationsreaktor vorgesehen. Für diesen zusätzlichen Direktoxidationsreaktor können eine Betriebsweise und Ausstattung gewählt werden, wie sie oben im Zusammenhang mit dem Direktoxidationsreaktor nach der Hydrierung ausgeführt wurden.

Da im erfindungsgemäßen Verfahren nur eine einzige katalytische Claus-Stufe benötigt wird, eignet sich das erfindungsgemäße Verfahren auch für den Umbau bestehender Claus-Anlagen, bei denen die Schwefelrückgewinnungsrate gesteigert werden soll. Für den Umbau wird die zweite und gegebenenfalls die dritte katalytische Claus-Stufe der Altanlage außer Betrieb genommen, wodurch das zum Passieren des Direktoxidationsreaktors erforderliche Druckgefälle gesichert wird.

Im folgenden wird die Erfindung anhand eines Ausführungsbeispiels näher erläutert.

Hierbei zeigt

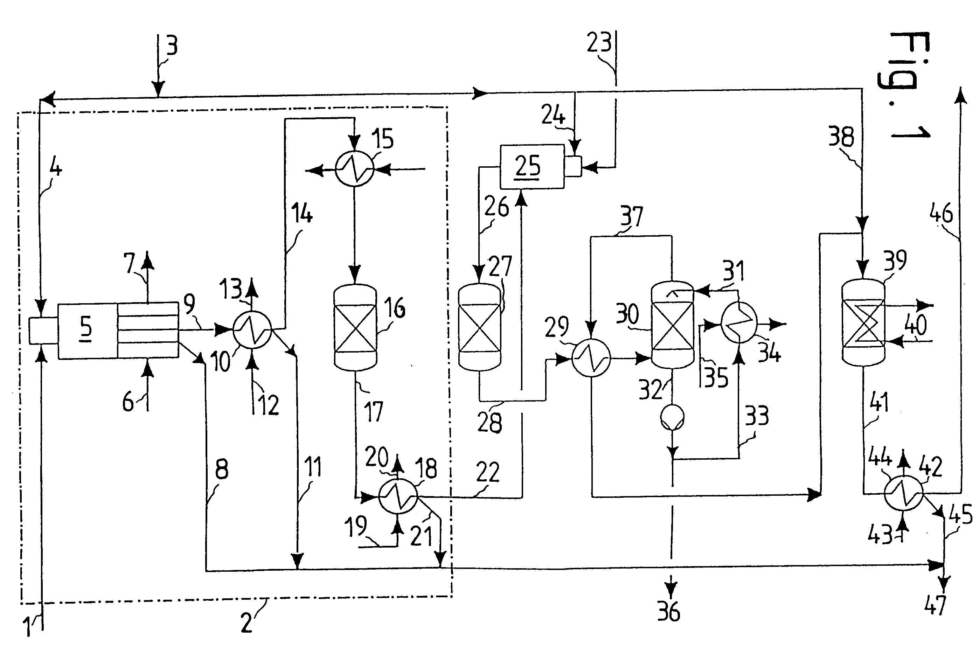

Figur 1:     Ein Schema des erfindungsgemäßen Verfahrens.

Über Leitung 1 wird ein Sauergas mit beispielsweise 80 Vol.-% $H_2S$ einer ein-stufigen Claus-Anlage 2 zugeführt. Die Claus-Anlage 2 ist in Figur 1 dabei durch eine strichpunktierte Linie kenntlich gemacht. Luft bzw. Sauerstoff aus Leitung 3 wird über Leitung 4 zusammen mit dem Claus-Rohgas aus Leitung 1 in den Claus-Ofen 5 eingespeist. Im Claus-Ofen 5 wird etwa 1/3 des im Sauergas 1 enthaltenen $H_2S$ in $SO_2$ verbrannt. Kesselspeisewasser in Leitung 6 wird im Wärmetausch mit dem heißen Claus-Gas erhitzt und als Dampf unter mittlerem Druck in Leitung 7 gewonnen. Elementarer Produktschwefel wird über Leitung 8 abgetrennt.

Über Leitung 9 wird das Claus-Gas in den Schwefelkondensator 10 gegeben, wo elementarer Schwefel auskondensiert und über Leitung 11 abgezogen wird. Die Abkühlung im Schwefelkondensator 10 erfolgt über Kesselspeisewasser in Leitung 12, das nach der Erhitzung im Schwefelkondensator 10 als Niederdruckdampf anfällt. Nach dem Schwefelkondensator 10 wird das Claus-Gas 14 durch einen indirekten Wärmetausch 15 mit Mitteldruckdampf erwärmt und in den katalytischen Claus-Reaktor 16 geführt. Dort findet entsprechend der Claus-Reaktion eine Umsetzung von $H_2S$ mit $SO_2$ in Elementarschwefel statt. Das vom Claus-Reaktor 16 abgezogene Gas in Leitung 17 wird in einem zweiten Schwefelkondensator 18 eingespeist, wobei Kesselspeisewasser 19 in Niederdruckdampf 20 umgewandelt wird und elementarer Schwefel als Produkt 21 vom Claus-Abgas 22 abgetrennt wird.

Das Claus-Abgas in Leitung 22 weist im Beispiel noch einen Schwefelgehalt von etwa 1 bis 3 Vol.-% auf. Ein derartiger Schwefelgehalt im Claus-Abgas 22 wird mit einer einstufigen Claus-Anlage 2 dadurch ermöglicht, daß im Wärmetauscher 15 das Gasgemisch in Leitung 14 soweit angewärmt wird, daß das Katalysatorbett des Claus-Reaktors 16 am Austritt eine Temperatur einnimmt, die knapp oberhalb des Schwefeltaupunkts liegt. Im Gegensatz zur Direktoxidation nach Gleichung 2 ist nämlich die Claus-Reaktion nach Gleichung 1 stark temperaturabhängig. Die Umsetzung in Elementarschwefel ist im Claus-Reaktor 16 daher bei den gewählten Temperaturen knapp oberhalb des Schwefeltaupunkts besonders hoch, ohne daß aber bereits im Reaktor Schwefel auskondensiert und die Durchströmung des Reaktors behindern kann.

Über Leitung 23 wird Brenngas, beispielsweise Erdgas, und über Leitung 24 Luft bzw. $O_2$ in den Brenner 25 zur Hydriergaserzeugung gegeben. Das Gemisch aus Hydriergas und Claus-Abgas wird über Leitung 26 in den Reaktor 27 einspeist. Im Reaktor 27 findet eine Hydrierung der Schwefelverbindungen, vor allem des $SO_2$, in $H_2S$ statt. Sind im Claus-Abgas 22 auch COS und/oder $CS_2$ enthalten, so werden diese mittels Hydrolyse ebenfalls in $H_2S$ umgewandelt. Das hydrierte Claus-Abgas in Leitung 28 wird im Wärmetauscher 29 im indirekten Wärmetausch abgekühlt und in den Quenchkühler 30 gegeben. Das hydrierte Claus-Abgas wird im Quenchkühler 30 im direkten Wärmetausch mit kühlerem Wasser aus Leitung 31 weiter abgekühlt, so daß Wasser über Leitung 32 aus dem hydrierten Claus-Abgas entfernt wird. Ein Teil des auskondensierten Wassers aus Leitung 32 wird über Leitung 33 nach indirekter Kühlung 34 mit Kühlwasser 35 über Leitung 31 in den Quenchkühler 30 gepumpt, während der andere Teil des Kondensats aus Leitung 32 über Leitung 36 abgeführt wird. Vom Kopf des Quenchkühlers 30 wird im wesentlichen von Wasser befreites, hydriertes Claus-Abgas über Leitung 37 abgezogen und im Wärmetauscher 29 gegen das heißere hydrierte Claus-Abgas 28 angewärmt.

Das hydrierte und entwässerte Claus-Abgas 37 wird nach der Anwärmung 29 mit einer für die Direktoxidation stöchiometrisch bemessenen Menge an Luft bzw. $O_2$ über Leitung 38 vermischt und in den Reaktor 39 für die katalytische Direktoxidation eingespeist. Der Direktoxidationsreaktor 39 wird mit Kesselspeisewasser 40 indirekt gekühlt, wobei im Reaktor 39 eine Temperatur unterhalb 300°C, beispielsweise 290°C an der heißesten Stelle des Reaktors und 230°C am Reaktoraustritt, eingestellt wird. Der vom Direktoxidationsreaktor über Leitung 41 abgezogene Gasstrom wird einem weiteren Schwefelkondensator 42 zugeführt. Zur Kühlung des Schwefelkondensators 42 wird Kesselspeisewasser 43 verwendet, was durch den Wärmetausch in Niederdruckdampf 44 umgewandelt wird. Im Schwefelkondensator 42 auskondensierter Elementarschwefel wird über Leitung 45 abgezogen. Im Direktoxidationsreaktor 39 werden über 90 %, beispielsweise 95 %, des noch im Claus-Abgas in Leitung 37 enthaltenen Restschwefels in Elementarschwefel umgewandelt und über Leitung 45 zurückgewonnen.

Das vom Elementarschwefel befreite Claus-Abgas wird über Leitung 46 beispielsweise in eine nicht dargestellte Nachverbrennung geleitet.

Insgesamt können mit dem in Figur 1 dargestellten Verfahren in Leitung 47 im Langzeitdurchschnitt zwischen 99,3 und 99,6 % - im Beispiel sind es 99,5 % - des im Sauergas 1 enthaltenen Schwefels in Form von Elementarschwefel zurückgewonnen werden.

**Patentansprüche**

1. Verfahren zur Gewinnung von elementarem Schwefel aus einem $H_2S$ enthaltenden Gasgemisch (1), wobei das Gasgemisch (1) zunächst in einer Claus-Anlage (2) mit thermischem (5) und katalytischem (16) Teil einer Entschwefelung unter Gewinnung von Elementarschwefel (8, 11, 21) unterworfen wird, wobei die noch im Claus-Abgas (22) enthaltenen Schwefelverbindungen mittels Hydrierung und gegebenenfalls mittels Hydrolyse in $H_2S$ umgewandelt werden (27) und wobei das hydrierte Claus-Abgas (28, 37) anschließend einer katalytischen Direktoxidation (39) des $H_2S$ zu Elementarschwefel unterzogen wird, **dadurch gekennzeichnet,** daß die Claus-Anlage (2) an katalytischen Stufen genau eine (16) umfaßt und daß die katalytische Direktoxidation in genau einem Reaktor (39) erfolgt, wobei eine Temperatur am Austritt des besagten Reaktors (39) eingehalten wird, die über dem Schwefeltaupunkt liegt.

2. Verfahren nach Anspruch 1, dadurch gekennzeichnet, daß der Reaktor (39) zur katalytischen Direktoxidation innengekühlt wird.

3. Verfahren nach Anspruch 2, dadurch gekennzeichnet, daß der Reaktor (39) zur katalytischen Direktoxidation mit einer in Durchströmungsrichtung adiabat betriebenen Katalysatorvorschicht ausgestattet ist.

4. Verfahren nach Anspruch 3, dadurch gekennzeichnet, daß die adiabate Vorschicht weniger als 50 %, vorzugsweise zwischen 15 und 30 %, des Katalysatorvolumens enthält.

5. Verfahren nach einem der Ansprüche 2 bis 4, dadurch gekennzeichnet, daß im Reaktor (39) zur katalytischen Direktoxidation der Katalysator homogen geschüttet ist und daß gewickelte Wärmetauscherrohre zumindestens teilweise im Katalysator eingebettet sind.

6. Verfahren nach einem der Ansprüche 1 bis 5, dadurch gekennzeichnet, daß die katalytische Direktoxidation bei Temperaturen bis 400°C, vorzugsweise zwischen 250 und 300°C, besonders bevorzugt zwischen 280 und 300°C, an der heißesten Stelle des Reaktors (39) durchgeführt wird.

7. Verfahren nach einem der Ansprüche 1 bis 6, dadurch gekennzeichnet, daß aus dem hydrierten Claus-Abgas (28) Wasser (32) mittels Quenchkühlung (30) entfernt wird.

8. Verfahren nach einem der Ansprüche 1 bis 7, dadurch gekennzeichnet, daß das Abgas (46) der katalytischen Direktoxidation (39) nach Abtrennung des Elementarschwefels (42, 45) in eine Nachverbrennung gegeben wird.

9. Verfahren nach einem der Ansprüche 1 bis 8, dadurch gekennzeichnet, daß die katalytische Claus-Stufe (16) mit einem geringen $H_2S$-Überschuß gefahren wird.

10. Verfahren nach einem der Ansprüche 1 bis 9, dadurch gekennzeichnet, daß falls das Gasgemisch (1) einen $H_2S$-Gehalt von 15 bis 45 % aufweist, 40 bis 66 % des Gasgemisches über einen Bypass um die thermische Claus-Stufe (5) in die katalytische Claus-Stufe (16) geleitet werden.

**Claims**

1. Process for producing elemental sulphur from a gas mixture (1) comprising $H_2S$, the gas mixture (1) first being subjected to a desulphurization with production of elemental sulphur (8, 11, 21) in a Claus plant (2) having a thermal (5) part and a catalytic (16) part, the sulphur compounds still present in the Claus tail gas (22) being converted (27) into H$_2$S by hydrogenation and, if appropriate, hydrolysis, and the hydrogenated Claus tail gas (28, 37) then being subjected to a catalytic direct oxidation (39) of the H$_2$S to elemental sulphur, characterized in that the Claus plant (2) includes precisely one (16) catalytic stage and in that the catalytic direct oxidation is performed in precisely one reactor (39), a temperature which is above the dew point of sulphur being maintained at the exit of the said reactor (39).

2. Process according to Claim 1, characterized in that the reactor (39) for the catalytic direct oxidation is internally cooled.

3. Process according to Claim 2, characterized in that the reactor (39) for the catalytic direct oxidation is equipped with a catalyst prelayer which is operated adiabatically in the direction of flow.

4. Process according to Claim 3, characterized in that the adiabatic prelayer comprises less than 50%, preferably between 15 and 30%, of the catalyst volume.

5. Process according to one of Claims 2 to 4, characterized in that the catalyst is packed homogeneously in the reactor (39) for the catalytic direct oxidation and in that coiled heat-exchanger tubes are at least in part embedded in the catalyst.

6. Process according to one of Claims 1 to 5, characterized in that the catalytic direct oxidation is carried out at temperatures up to 400°C, preferably between 250 and 300°C, particularly preferably between 280 and 300°C, at the hottest point of the reactor (39).

7. Process according to one of Claims 1 to 6, characterized in that water (32) is removed from the hydrogenated Claus tail gas (28) by quench cooling (30).

8. Process according to one of Claims 1 to 7, characterized in that the tail gas (46) of the catalytic direct oxidation (39) is passed, after separating off the elemental sulphur (42, 45), to an afterburning stage.

9. Process according to one of Claims 1 to 8, characterized in that the catalytic Claus stage (16) is run with a slight H$_2$S excess.

10. Process according to one of Claims 1 to 9, characterized in that, if the gas mixture (1) has an H$_2$S content of 15 to 45%, 40 to 66% of the gas mixture is passed via a by-pass around the thermal Claus stage (5) into the catalytic Claus stage (16).

**Revendications**

1. Procédé d'obtention de soufre élémentaire à partir d'un mélange de gaz (1) contenant du H$_2$S, dans lequel le mélange de gaz (1) est d'abord soumis, dans une installation de Claus (2) pourvue d'une partie thermique (5) et catalytique (16), à une désulfuration avec obtention de soufre élémentaire (8, 11, 21), dans lequel les composés soufrés encore contenus dans l'effluent gazeux de Claus (22) sont convertis (27) en H$_2$S par hydrogénation et, le cas échéant, par hydrolyse, et dans lequel l'effluent gazeux de Claus hydrogéné (28, 37) est ensuite soumis à une oxydation catalytique directe (39) du H$_2$S en soufre élémentaire, caractérisé en ce que l'installation de Claus (2) comprend juste une étape catalytique (16) et en ce que l'oxydation catalytique directe se produit dans juste un réacteur (39), une température qui est supérieure au point de condensation du soufre étant respectée à la sortie dudit réacteur (39).

2. Procédé suivant la revendication 1, caractérisé en ce que le réacteur (39) pour l'oxydation catalytique directe est refroidi intérieurement.

3. Procédé suivant la revendication 2, caractérisé en ce que le réacteur (39) pour l'oxydation catalytique directe est pourvu d'une pré-couche de catalyseur opérant de manière adiabatique dans le sens de l'écoulement.

4. Procédé suivant la revendication 3, caractérisé en ce que la pré-couche adiabatique contient moins de 50%, de préférence entre 15 et 30%, du volume du catalyseur.

5. Procédé suivant l'une quelconque des revendications 2 à 4, caractérisé en ce que le catalyseur est introduit de manière homogène dans le réacteur (39) pour l'oxydation catalytique directe, et en ce que des tuyaux enroulés de l'échangeur de chaleur sont au moins en partie encastrés dans le catalyseur.

6. Procédé suivant l'une quelconque des revendications 1 à 5, caractérisé en ce que l'oxydation catalytique directe est réalisée à des températures allant jusqu'à 400°C, de préférence entre 250 et 300°C, mieux encore entre 280 et 300°C, au point le plus chaud du réacteur (39).

7. Procédé suivant l'une quelconque des revendications 1 à 6, caractérisé en ce que de l'eau (32) est éliminée de l'effluent gazeux de Claus hydrogéné (28) au moyen d'un refroidisseur à injection (30).

**8.** Procédé suivant l'une quelconque des revendications 1 à 7, caractérisé en ce que l'effluent gazeux (46) de l'oxydation catalytique directe (39) est amené à une réchauffe après séparation du soufre élémentaire (42, 45).

**9.** Procédé suivant l'une quelconque des revendications 1 à 8, caractérisé en ce que l'étape catalytique de Claus (16) est conduite avec un faible excès de $H_2S$.

**10.** Procédé suivant l'une quelconque des revendications 1 à 9, caractérisé en ce que, si le mélange de gaz (1) présente une teneur en $H_2S$ de 15 à 45%, 40 à 66% du mélange de gaz sont conduits à l'étape catalytique de Claus (16) par une dérivation autour de l'étape thermique de Claus (5).

EP 0 672 618 B1

Fig. 1

9